# DEMANDE DE BREVET EUROPEEN

(11) **EP 3 287 672 A1**
(43) Date de publication de la demande: **28.02.2018**
(21) Numéro de dépôt: 17184513.4
(22) Date de dépôt: 02.08.2017
(51) Int. Cl.: F16H 63/50, B60W 30/20

(54) **PROCEDE DE CONTROLE D'UN COUPLE MOTEUR D'UN VEHICULE, NOTAMMENT AUTOMOBILE**

(30) Priorité: 23.08.2016 FR 1657852
(71) Demandeur: PSA Automobiles SA, 78300 Poissy (FR)
(72) Inventeur: LINANT, Francois, 78780 MAURECOURT (FR)

(57) **Abrégé**

L'invention concerne un procédé de contrôle d'un couple moteur d'un véhicule, notamment automobile.

Le procédé consiste en l'exécution d'une étape de convergence monotone du couple délivré en sortie du moteur C_{M} vers la valeur de couple correspondant à la volonté du conducteur C_{VC}, pour éviter les à-coups lors d'un changement de rapport de vitesse.

L'invention trouve son application dans le domaine de l'industrie automobile.

## Description

L'invention concerne un procédé de contrôle d'un couple moteur pour un véhicule, notamment automobile, équipé d'une boîte de vitesse manuelle, lors d'un changement de rapport de vitesse.

De manière connue en soi, le passage d'un rapport de vitesse réalisé par le conducteur d'un véhicule, notamment automobile, à l'aide d'une boite de vitesse manuelle peut provoquer des discontinuités dans la transmission du couple moteur aux roues du véhicule. Cela génère des oscillations du moteur, provoquant des à-coups d'accélération du véhicule peu confortables pour le conducteur et les occupants du véhicule.

Le document FR 2910419 divulgue un procédé de contrôle du couple moteur d'un véhicule équipé d'une boite de vitesses manuelle, qui commande lors des phases d'engagement de l'embrayage l'application d'un couple supplémentaire au moteur pour éviter la chute du régime moteur et pour que le couple moteur soit supérieur ou égal à une valeur de couple minimale. De la sorte, les à-coups lors des passages de vitesses sont réduits.

Cependant, le couple moteur augmenté et appliqué par l'intermédiaire du procédé dépend essentiellement de l'inertie du moteur et du couple estimé transmis par l'embrayage. Ainsi, bien que le procédé décrit dans le document FR 2910419 permette de réduire les à-coups d'accélération, il ne peut les supprimer totalement.

La présente invention a pour but de pallier les inconvénients ci-dessus de l'art antérieur.

Pour atteindre ce but, l'invention concerne un procédé de contrôle d'un couple moteur d'un véhicule, notamment automobile, équipé d'une boite de vitesses manuelle, lequel procédé comprend successivement, lors d'un engagement de l'embrayage de la boite de vitesses pendant un changement de rapport de vitesse et lorsque le régime du moteur du véhicule atteint à un instant t₀ la même valeur que le régime de l'arbre primaire de la boite de vitesses :
- Une étape de calcul d'un couple initial résultant de la somme d'une valeur de couple correspondant à la volonté du conducteur et calculée en fonction du degré d'enfoncement de la pédale d'accélération du véhicule et d'une valeur de couple inertiel du moteur calculée à l'instant t₀ ;
- Une étape d'application d'un couple délivré par le moteur du véhicule égal au couple initial calculé, pour éviter la chute de couple délivré à l'arbre primaire de la boîte de vitesses lorsque le régime du moteur atteint le régime de l'arbre primaire de la boîte de vitesse ;
- Une étape de convergence monotone du couple délivré en sortie du moteur vers la valeur de couple correspondant à la volonté du conducteur.

Selon une autre particularité, le procédé est mis en oeuvre au cours d'un changement de rapport de vitesse montant.

Selon une autre particularité, l'étape de convergence monotone consiste en une diminution par paliers successifs du couple délivré par le moteur depuis la valeur de couple initial jusqu'à la valeur de couple correspondant à la volonté du conducteur.

Selon une autre particularité, la valeur du couple inertiel du moteur est calculée selon la formule *J ×dω*/*dt,* ou J est l'inertie du moteur à un instant donné et *dω*/*dt* la dérivée en fonction du temps du régime moteur.

Selon une autre particularité, le régime de l'arbre primaire de la boite de vitesses est calculé en multipliant le régime des roues du véhicule par le rapport de démultiplication de la boite de vitesses correspondant au rapport de vitesse à engager.

Selon une autre particularité, le procédé est uniquement mis en oeuvre lorsque le degré d'enfoncement de la pédale d'embrayage dépasse un seuil déterminé.

Selon une autre particularité, le contrôle du couple délivré par le moteur dépend directement de la quantité de carburant injecté dans le moteur.

Selon une autre particularité, le procédé est mis en oeuvre par un calculateur du véhicule.

L'invention concerne également un véhicule automobile comprenant une boîte de vitesse manuelle et au moins un calculateur adapté pour mettre en oeuvre un procédé de contrôle d'un couple moteur du véhicule tel que décrit précédemment, lors d'un changement de rapport de vitesse.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lequel :
- La figure 1 représente des courbes montrant l'évolution des régimes du moteur et de l'arbre primaire de la boite de vitesse, des couples délivrés en sortie du moteur et au niveau de l'embrayage, de la position de la pédale d'embrayage et enfin de l'accélération du châssis du véhicule lors d'un passage de vitesse sans mise en oeuvre d'un procédé de contrôle du couple moteur;
- La figure 2 représente ces courbes en partie modifiées par la mise en oeuvre du procédé de contrôle du couple moteur de l'invention.

En référence aux figures, le procédé de contrôle d'un couple moteur d'un véhicule automobile équipé d'une boîte de vitesse manuelle va maintenant être décrit.

Ce procédé est mis en oeuvre par au moins un calculateur du véhicule préférentiellement au cours d'un changement de rapport de vitesse montant. En outre, le procédé est mis en oeuvre uniquement lors des changements de rapports de vitesses. Pour ce faire, le degré d'enfoncement P_{E} de la pédale d'embrayage est mesuré en continu par un capteur prévu à cet effet et piloté par le calculateur du véhicule. Ainsi, lorsque la pédale d'embrayage est enfoncée au-delà d'un seuil, le calculateur met en oeuvre les différentes étapes du procédé de contrôle du couple moteur C_{M} qui vont être décrites ci-après. Le seuil d'enfoncement de la pédale d'embrayage est enregistré dans un espace mémoire du calculateur, et est paramétrable en fonction des caractéristiques de l'embrayage du véhicule et de sa commande.

Au cours de la première étape du procédé, au moins un dispositif du type compte-tours ou analogue du véhicule et relié au calculateur mesure en continu le régime du moteur *ω*, c'est-à-dire le nombre de tours effectués par l'arbre de sortie du moteur sur une période de temps donnée, préférentiellement le nombre de tours par minute. En outre, ce dispositif du type compte-tours mesure le régime des roues du véhicule de sorte que le calculateur puisse en déduire le régime de l'arbre primaire ω*_{AP}* de la boite de vitesses du véhicule à tout instant, selon la formule *ω_{AP}* = *ωᵣₒᵤₑₛ* × *Q,* Q étant le rapport de démultiplication de la boite de vitesses correspondant au rapport de vitesse à engager à la fin du changement de rapport de vitesse.

Au cours de cette même étape du procédé, le calculateur du véhicule calcule la différence entre le régime moteur *ω* et le régime de l'arbre primaire ω*_{AP}* de la boite de vitesses à chaque fois qu'au moins une des deux valeurs *ω*, ω*_{AP}* change, de manière à ce que le calculateur surveille continuellement cette différence, calculée selon la formule *D* = *ω*-*ω_{AP}*.

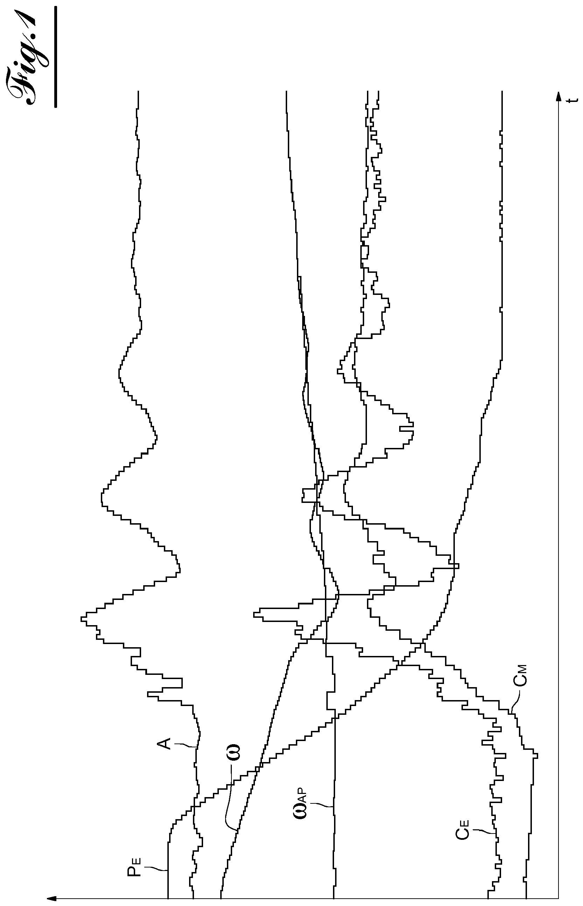

Le procédé de contrôle du couple selon l'invention est configuré pour empêcher que le régime moteur *ω* devienne inférieur au régime de l'arbre primaire *ω_{AP}* de la boite de vitesses, lorsque le conducteur relâche progressivement la pédale d'embrayage pour permettre l'engagement de l'embrayage et le passage du rapport de vitesse. En effet, tant que le régime moteur *ω_{AP}* est supérieur au régime de l'arbre primaire *ω_{AP}* de la boite de vitesses, le couple inertiel délivré par l'arbre de sortie du moteur fournit du couple supplémentaire au couple transmis niveau de l'embrayage C_{E}. En revanche, si le régime moteur *ω* devient inférieur au régime de l'arbre primaire *ω_{AP}* de la boite de vitesses, alors l'arbre de sortie du moteur prélève du couple au niveau de l'embrayage, ce qui fait chuter drastiquement le couple transmis au niveau de l'embrayage C_{E}. Il en résulte les à-coups d'accélération comme représentés sur la courbe A de la figure 1, caractéristiques d'une chute de couple transmis au niveau de l'embrayage provoquant des oscillations du régime moteur *ω*, du couple délivré par le moteur C_{M} et du couple transmis au niveau de l'embrayage CE comme le montrent les courbes correspondantes de la figure 1.

Ainsi, dès que le régime moteur *ω* atteint à un instant t₀ la même valeur que le régime que l'arbre primaire *ω_{AP}* de la boite de vitesses, la deuxième étape du procédé de contrôle du couple moteur est mise en oeuvre et consiste en un calcul d'un couple initial Cᵢₙᵢ par le calculateur, résultant de la somme d'une valeur de couple moteur correspondant à la volonté du conducteur C_{VC} et d'une valeur de couple inertiel du moteur à l'instant t₀. Le couple moteur correspondant à la volonté du conducteur C_{VC} est calculé en fonction du degré d'enfoncement de la pédale d'accélérateur par le conducteur, tandis que le couple inertiel est calculé selon la formule *J* × *d**ω**ldt,* ou J est l'inertie du moteur à l'instant t₀ en kg.m² et *dωldt* la dérivée en fonction du temps du régime moteur *ω*. La valeur du couple initial Cᵢₙᵢ à l'instant t₀ est donc obtenu selon la formule *Cᵢₙᵢ* = *C_{VC}* + *J* × *dω*/*dt.*

Une fois le couple initial Cᵢₙᵢ calculé, la troisième étape du procédé est mise en oeuvre par la calculateur : un couple délivré par le moteur C_{M} du véhicule égal au couple initial *Cᵢₙᵢ* est appliqué par une structure couple du véhicule commandée par le calculateur, ce qui permet d'éviter la chute de couple délivré au niveau de l'embrayage CE lorsque le régime du moteur *ω* atteint le régime de l'arbre primaire *ω_{AP}* de la boite de vitesses. Cette structure couple, bien connue de l'homme du métier, est une architecture du contrôle moteur permettant un contrôle précis du couple moteur demandé par le conducteur, en contrôlant la quantité de carburant injecté dans le moteur.

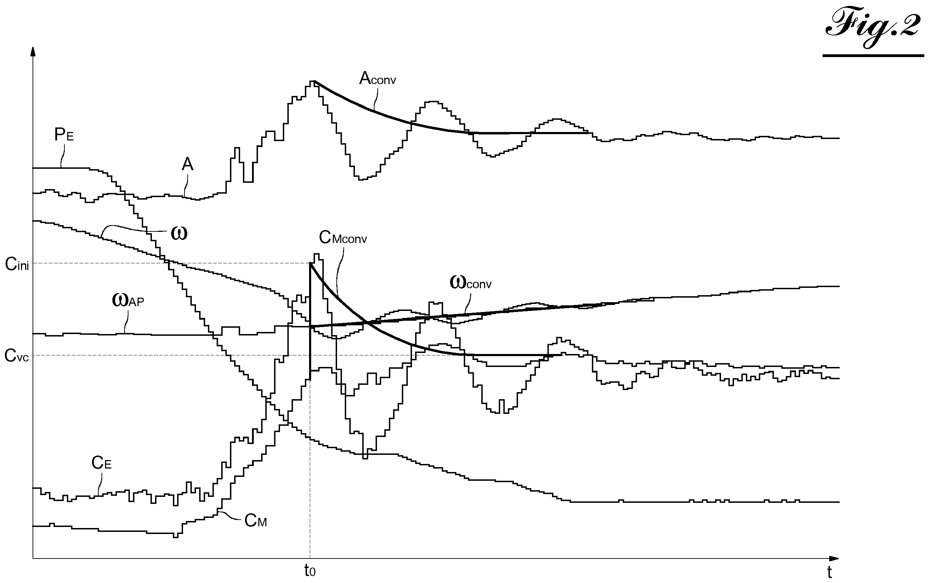

Au cours de la quatrième étape du procédé, le calculateur met en oeuvre une fonction de convergence monotone du couple délivré en sortie du moteur depuis la valeur du couple initial Cᵢₙᵢ vers la valeur du couple correspondant à la volonté du conducteur C_{VC}, comme représenté sur la courbe C_{Mconv} de la figure 2. La valeur du couple initial *Cᵢₙᵢ* étant supérieure à la valeur du couple correspondant à la volonté du conducteur C_{VC} la valeur du couple moteur C_{M} va progressivement diminuer de manière monotone et progressive, jusqu'à cette valeur du couple correspondant à la volonté du conducteur C_{VC}.

Cette étape de convergence monotone consiste en une diminution par paliers successifs du couple délivré par le moteur C_{M}, depuis la valeur de couple initial *Cᵢₙᵢ* jusqu'à la valeur de couple correspondant à la volonté du conducteur C_{VC}. Préférentiellement, le palier de diminution est constant et intervient suivant un intervalle de temps constant. A titre d'exemple illustratif, si on considère que le couple initial *Cᵢₙᵢ* présente une valeur de deux cents N.m et le couple correspondant à la volonté du conducteur C_{VC} présente une valeur de cinquante N.m, et que le palier de convergence est paramétré dans le calculateur pour dix N.m toutes les dix millisecondes, alors le calculateur réalisera en cent cinquante millisecondes quinze pas de calcul pour faire converger le couple délivré par le moteur C_{M} depuis la valeur du couple initial *Cᵢₙᵢ* vers la valeur du couple correspondant à la volonté du conducteur C_{VC}.

Le procédé permet donc d'éviter une baisse drastique du couple au niveau de l'embrayage C_{E}, et met en oeuvre une baisse progressive et monotone du couple moteur C_{M} vers une valeur de couple correspondant à la volonté du conducteur C_{VC}. De la sorte, les oscillations du régime moteur *ω* disparaissent, comme on le voit sur la courbe ω_{conv} de la figure 2, et l'accélération du châssis du véhicule ne présente plus d'à-coups, comme représenté sur la courbe A_{conv} de la figure 2.

La configuration telle que décrite n'est pas limitée au mode de réalisation décrit dans le texte et représenté sur les figures. Elle n'a été donnée qu'à titre d'exemple non limitatif. De multiples modifications peuvent être apportées sans pour autant sortir du cadre de l'invention. Ainsi on pourrait imaginer que le dispositif du type compte-tours mesure directement le régime de l'arbre moteur *ω_{AP}.* En outre, le calcul du couple inertiel peut être remplacé par le calcul d'un couple proportionnel à la dérivée en fonction du temps du régime moteur *ω*. De plus, la convergence du couple délivré en sortie du moteur C_{M} vers le couple correspondant à la volonté du conducteur C_{VC} peut ne pas être monotone. Enfin, l'application du couple initial *Cᵢₙᵢ* à t₀ pourra être anticipée ou retardée pour optimiser la prestation.

## Revendications

1. Procédé de contrôle d'un couple moteur (C_{M}) d'un véhicule, notamment automobile, équipé d'une boite de vitesses manuelle, lequel procédé comprend successivement, lors d'un engagement de l'embrayage de la boite de vitesses pendant un changement de rapport de vitesse et lorsque le régime du moteur (*ω*) du véhicule atteint à un instant t₀ la même valeur que le régime de l'arbre primaire (*ω_{AP}*) de la boite de vitesses :
• Une étape de calcul d'un couple initial (Cᵢₙᵢ) résultant de la somme d'une valeur de couple moteur correspondant à la volonté du conducteur (C_{VC}) et calculée en fonction du degré d'enfoncement de la pédale d'accélération du véhicule et d'une valeur de couple inertiel du moteur calculée à l'instant t₀ ;
• Une étape d'application d'un couple délivré par le moteur (C_{M}) du véhicule égal au couple initial calculé (Cᵢₙᵢ), pour éviter la chute de couple délivré à l'arbre primaire (CE) de la boîte de vitesses lorsque le régime du moteur (*ω*) atteint le régime de l'arbre primaire (*ω_{AP}*) de la boîte de vitesse ;
• Une étape de convergence du couple délivré en sortie du moteur (C_{M}) vers la valeur de couple correspondant à la volonté du conducteur (C_{VC}).

2. Procédé de contrôle d'un couple moteur selon la revendication 1, **caractérisé en ce qu'**il est mis en oeuvre au cours d'un changement de rapport de vitesse montant.

3. Procédé de contrôle d'un couple moteur selon la revendication 1 ou 2, **caractérisé en ce que** l'étape de convergence consiste en une diminution par paliers successifs du couple délivré par le moteur (C_{M}) depuis la valeur de couple initial (Cᵢₙᵢ) jusqu'à la valeur de couple correspondant à la volonté du conducteur (C_{VC}).

4. Procédé de contrôle d'un couple moteur selon la revendication 3, **caractérisé en ce que** le palier de diminution est constant et intervient suivant un intervalle de temps constant.

5. Procédé de contrôle d'un couple moteur selon l'une quelconque des revendications 1 à 4, **caractérisé en ce que** la valeur du couple inertiel du moteur est calculé selon la formule *J* × *dω*/*dt,* ou J est l'inertie du moteur à un instant donné et *dωldt* la dérivée en fonction du temps du régime moteur (*ω*).

6. Procédé de contrôle d'un couple moteur selon l'une quelconque des revendications 1 à 5, **caractérisé en ce que** le régime de l'arbre primaire (ω*_{AP}*) de la boite de vitesses est calculé en multipliant le régime des roues du véhicule par le rapport de démultiplication de la boite de vitesses correspondant au rapport de vitesse à engager.

7. Procédé de contrôle d'un couple moteur selon l'une quelconque des revendications 1 à 6, **caractérisé en ce que** le procédé est uniquement mis en oeuvre lorsque le degré d'enfoncement (P_{E}) de la pédale d'embrayage dépasse un seuil déterminé.

8. Procédé de contrôle d'un couple moteur selon l'une quelconque des revendications 1 à 7, **caractérisé en ce que** le contrôle du couple délivré par le moteur (C_{M}) dépend directement de la quantité de carburant injecté dans le moteur.

9. Procédé de contrôle d'un couple moteur selon l'une quelconque des revendications 1 à 8, **caractérisé en ce qu'**il est mis en oeuvre par un calculateur du véhicule.

10. Véhicule automobile comprenant une boite de vitesses manuelle et au moins un calculateur adapté pour mettre en oeuvre un procédé de contrôle d'un couple moteur (C_{M}) du véhicule selon l'une quelconque des revendications 1 à 9, lors d'un changement montant de rapport de vitesse.
